# EUROPEAN PATENT SPECIFICATION

(11) **EP 3 624 578 B1**
(45) Date of publication and mention of the grant of the patent: **24.02.2021**
(21) Application number: 18726418.9
(22) Date of filing: 17.05.2018
(51) Int. Cl.: A01B 69/04, G06K 9/00, B60D 1/62, B60R 1/00, B60D 1/36, A01B 69/00, B60D 1/00, G06T 7/73

(54) **SYSTEM AND METHOD FOR AUTOMATIC CONNECTION BETWEEN A TRACTOR AND AN IMPLEMENT**
SYSTEM UND VERFAHREN ZUR AUTOMATISCHEN VERBINDUNG ZWISCHEN EINEM TRAKTOR UND EINEM ARBEITSGERÄT
SYSTÈME ET PROCÉDÉ DE RACCORDEMENT AUTOMATIQUE ENTRE UN TRACTEUR ET UN OUTIL

(30) Priority: 18.05.2017 IT 201700054083
(43) Date of publication of application: 25.03.2020
(73) Proprietor: CNH Industrial Italia S.P.A., 10135 Turin (IT)
(72) Inventor: FERRARI, Luca, 41043 Formigine (Modena) (IT); MORSELLI, Riccardo, 41057 San Vito Di Spilamberto Modena (IT); CHRISTOPHER, Elliott, 42048 RE Fontana Rubiera (IT)
(74) Representative: CNH Industrial IP Department
(86) International application number: PCT/EP2018/062853
(87) International publication number: WO 2018/210990

(56) References cited:
- WO-A1-2014/174028
- WO-A1-2016/119920
- DE-A1- 10 111 529
- DE-A1-102014 223 141
- GB-A- 2 469 438
- US-A1- 2015 077 557

## Description

The present invention relates to a system and method for automatic connection between a tractor and an implement.

Patent application US2015077557 describes a system where a couple of cameras are mounted on a tractor and produce images of a target mounted on the implement (for instance a wagon or trailer) to be connected to the tractor. An image processor unit processes the images and other information and a control system automatically controls the steering and movement of the tractor to align the tractor with the implement, so that the implement can be coupled automatically to the tractor. More specifically, the system aligns the hitch of the tractor with the implement and the tractor is automatically stopped when the hitch is aligned with the implement.

The target has a specific design or pattern which can be easily perceived by the cameras, for instance a checkerboard pattern. Therefore according to the above patent a specific pattern must be provided on the implement and the pattern support must be correctly aligned. This requires a mechanical modification of the original implement. The scope of the present invention is to provide a system for automatic connection between a tractor and an implement that does not require the use of patterns attached to the implement so that the system may be used with any implement even if not specifically equipped.

In addition, the system of US2015077557 requires the use of two cameras, namely a far-view camera used to identify the implement and begin the automated coupling operation from longer distances and a near-view camera that provides higher localization accuracy when the tractor is near the implement. Further scope of the present invention is to realize a system wherein just one camera is necessary.

The above scope is obtained by the present invention that relates to a system for automatic connection between a tractor provided with a connection point and an implement provided with at least one hitch configured for connection with the connection point comprising: a 3D camera carried by the tractor and configured to continuously take images of the three-dimensional space S facing the implement; a processor is configured to detect on the continuously taken images the hitch and is designed to determine the spatial coordinates of the hitch with respect to the position of the tractor in order to calculate a path Pi between the tractor and the hitch; a controller configured to move the tractor along the calculated path Pi so that the tractor approaches the implement or the processor is configured to show the calculated path Pi on a display so that the user may steer the tractor, for enabling, at the end of the path Pi the **connection point** of the tractor to match with the hitch, characterized in that when the hitch moves out of the field-of-view of the camera the processor is configured to detect on the images alternative reference points Ra to re-calculate the path Pi.

The present invention also relates to a method for automatic connection between a tractor provided with a **connection point** and an implement provided with at least one hitch configured for connection with the **connection point** comprising the following steps: taking continuously images of the three-dimensional space S facing the implement; detecting on the continuously taken images of the hitch of the implement; determining the spatial coordinates of said hitch with respect to the position of the tractor in order to calculate a path Pi between the tractor and said implement hitch; moving, by means of an automatic controller or under the steering of the user, the tractor along the calculated path Pi so that the tractor approaches the implement for enabling, at the end of the path, the **connection point** of the tractor to match with the implement hitch, characterized by comprising the step of detecting on the images alternative reference points Ra in order to re-calculate the path Pi when the implement hitch moves out of the field-of-view of the camera.

The invention shall be described with the attached drawings that show a not limitative example wherein:
Figure 1 shows in a schematic manner a system for automatic connection between a tractor and an implement according to the present invention in a first position;
Figure 2 shows in a schematic manner a system for automatic connection between a tractor and an implement according to the present invention in a second position;
Figures 3 and 4 show another embodiment of the present invention; and
Figure 5 shows an image elaborated by the system of the present invention.

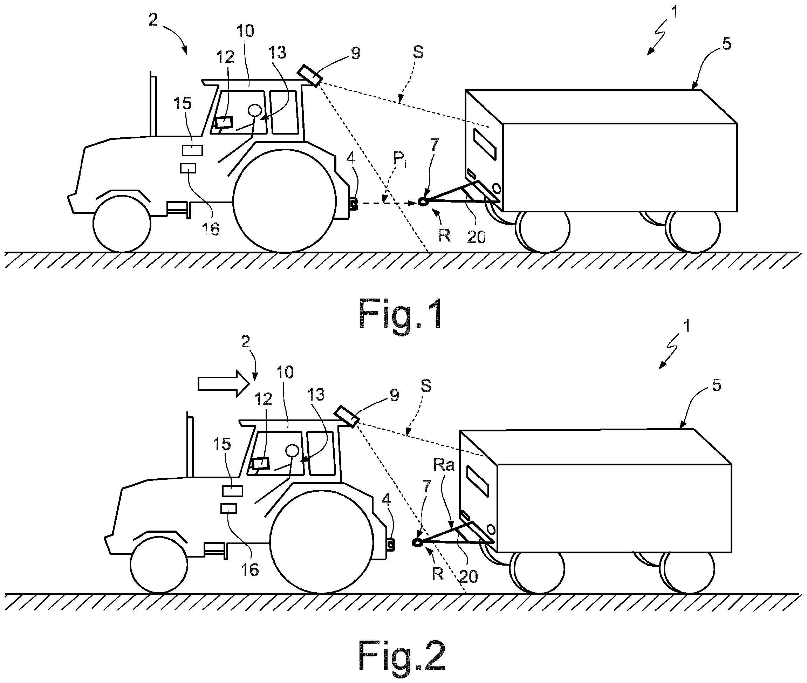

**In** **figure 1** numeral 1 indicates a system for automatic connection between a tractor 2 (the agricultural tractor of known kind is illustrated schematically) provided with a **connection point** 4 (of known kind - illustrated schematically) and an implement 5 (a wagon or a trailer for instance) provided with at least one hitch 7 configured for connection with the connection point 4 according to known techniques.

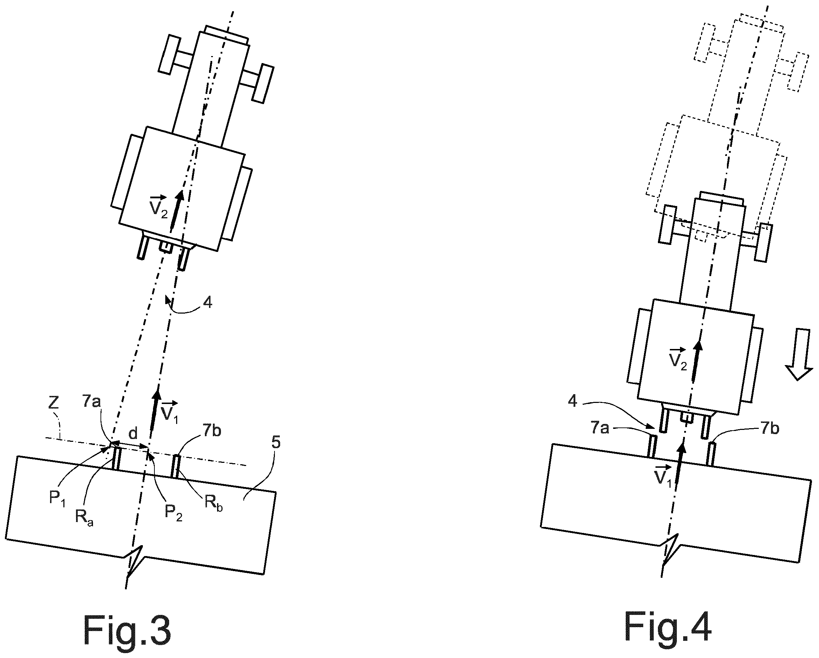

The connection point 4 may be designed for implements that are pulled by a tractor, typically using a drawbar to connect the implement to the tractor 2 (see in figures 1, 2 and 5 an example of this single point connection) or for implements that are carried by the tractor 2, typically using the three points hitch for connection (see in figures 3 and 4 an example of this connection).

The system 1 comprises a three-dimensional (3D) camera 9 (shown schematically) carried by the tractor 2 (in the example the camera 9 is placed on a top portion of the cabin 10 of the tractor 2 but other locations are available) and configured to take continuously images of the three-dimensional space S facing the implement 5.

The camera 9 could be a CCD (charge-coupled device) or a CMOS (complementary metal-oxide-semiconductor). Camera 9 output can be digital or analog, in color or in monochrome (preferably a high definition color digital camera is used). The camera 9 has a high dynamic range so it can successfully capture the target image in the lightest and darkest operation conditions. The camera 9 could operate in the Visible and/or IR region. The field-of-view of the camera 9 is large enough to be able to identify the target at the farthest and closest distances from tractor 2 to the implement 5.

The system 1 comprises also a display 12 (typically a LCD display featuring touch screen operations) placed in the cabin 10 and configured to display the captured image to the user 13 of the tractor 2. The user 13 of the tractor may therefore see on the display 12 the items that are placed on the back of the tractor 2 within a predetermined distance depending on the field-of-view of the camera 9. The output signal from the camera 9 is converted into digital format by a hardware device of known kind (not shown).

According to the invention the system 1 comprises a processor 15 that receives the digital images and it is configured to detect on the images a predetermined shape corresponding to the shape of the hitch 7 (or of the hitches if any) that is used as a reference point R. The detection of the hitch 7 is performed by a software associated with the processor 15 featuring image processing according to known techniques for instance by comparing some reference images of hitches with the digital image. Image pre-processing steps (e.g. median-filtering, Laplacian filtering, Histogram Equalization, ...) could be also implemented to help the classifier/software to identify and recognize the hitch.

According to a further preferred embodiment detection of the hitch 7 is performed by a software featuring detection based on a teaching mode. According to the teaching mode the image of the implement in use is taken in a teaching phase and the position of the hitch is manually determined on a display (for instance by using display 12 using known touch screen functions) to create a data base of images of hitches of implements. This data base is memorized and is further used by processor 15 to elaborate the images taken by camera 9 to determine the reference point R.

The processor 15 is designed to determine the spatial coordinates of the reference point R with respect to the position of the tractor 2 in order to calculate a path Pi between the tractor 2 and the hitch 7. The software embedded in processor 15 executes a process that finds the relationship between the coordinates in the camera reference frame and the corresponding coordinates in the world reference frame (i.e., location and orientation of the hitch image). The above relationship is defined by extrinsic camera parameters (translation and rotation matrices) that can be memorized or can be obtained during a calibration process.

The system 1 further comprises a controller 16 of the movement of the tractor 2 that interacts with the embedded electronics of the tractor in order to move the tractor 2 along the calculated path Pi so that the tractor 2 approaches the parked trailer 5 for enabling, at the end of the path, the **connection point** 4 of the tractor 2 to match with the hitch 7. The controller 16 can act on the steering, on the braking, on the transmission and on the engine control (not shown) of the tractor to move at low speed the tractor 2. The controller 16 may receive information from other sensors (not shown) placed around the tractor body and provided for detecting the presence of obstacles if any.

Alternatively, the processor 15 is configured to show the calculated path Pi on the display 12 so that the user may steer the tractor 2 following this path Pi.

The hitch 7 gets quite fast outside of the field-of-view of the 3D camera 9 (see figure 2) when the tractor 2 approaches the implement 5 as the camera 9 is mounted on the roof of the cabin 10.

The processor 15, when the images of the hitch are no longer available because the hitch 7 is out of the field-of-view of the camera 9, is configured to detect on the images alternative reference points Ra to be used for recalculating the path Pi.

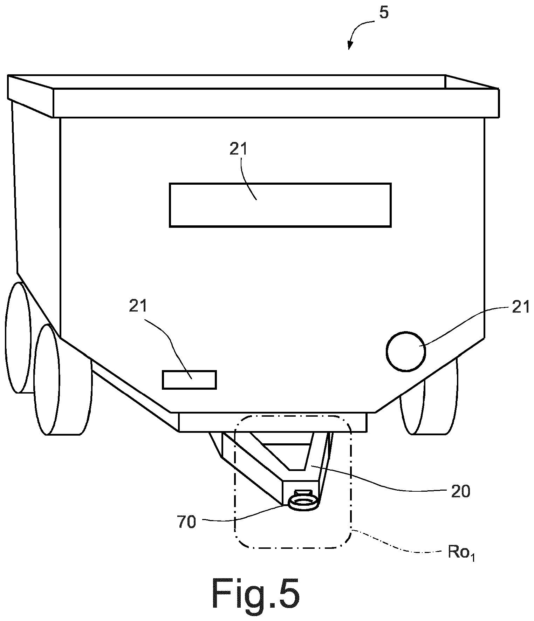

For finding alternative reference points Ra the processor 15 may extract automatically geometric shapes corresponding to parts of the implement 5 that have a fixed spatial relationship with respect to the hitch 7, for instance:
- Opposite sides of the draw bar 20 (the hitch is positioned at the free end of the drawbar);
- Easy distinguishable parts of the implement (for instance label 21, writings 21, etc - see figure 5) whose position can be determined with respect to the hitch. When required the user (i.e. the driver) can select and indicate geometric shapes that may function as alternative reference points Ra on the tractor display (12). More preferably, the software may suggest alternative reference points Ra to the user, the reference points may be shown on display 12 and the user may confirm the suggestion by means of a manual section command, for instance acting on the display 12 with touch screen functions. According to this embodiment the processor implements a semi - automatic extraction process where extracted alternative reference points have to be validated by the user in order to be stored and subsequently used.

The alternative reference points Ra and their spatial relationship to the hitch 7 can further be stored in the data base of images of the respective hitches 7. An algorithm can then be implemented to update the spatial relationship with every instance of connecting the tractor connection point to the hitch 7. For frequently used implements 5 information can be made available in the data base of images of hitches regarding detection of the hitch 7 and accurate information of the spatial relationship between the hitch 7 and the alternative reference points Ra, so that processing time is reduced and accuracy is increased.

When the tractor 2 is lined up to a number of implements 5, the processor 15 may try to detect the different hitches 7 in the field-of-view but leaves it to the discretion of the user to select the implement 5 that is to be connected. The above recalculation increases the accuracy in determining the final portion of path Pi. It is noted that, at least theoretically, the path Pi could still be defined with the hitch out of view but with a rather low resolution.

At the end of the path Pi the connection point 4 of the tractor is ready to match with the hitch 7 of the implement 5.

According to a first embodiment of the invention the user of the tractor has still to physical connect the parts. For instance, if a single point hitch connection is used a perfect alignment between parts is not required. The physical connection of the parts may therefore be performed by the user that may swing the drawbar 20 or modify the length of the drawbar 20 according to known techniques (for instance by using a telescopic draw bar) in order to establish physical connection.

According to a different embodiment (for instance if a three points hitch is used as described in the following) a higher level of alignment between parts is required. In this case the tractor 2 may move along the path Pi until physical connection between the parts is established. Figure 3 shows an implement 5 that has at least two hitches 7a and 7b lying in a reference vertical plane Z. This implement 5 is suitable to be connected with a **connection point** of the kind three points hitch.
In this case, the processor 15 is configured to find on the taken images the images of the two hitches 7a, 7b to determine respective reference points Ra, Rb used to calculate the vertical reference plane Z where the reference points Ra, Rb lie and one implement orientation vector V1 perpendicular to the reference plane Z.
The processor 15 is configured to receive the information regarding the position and the orientation of the tractor in order to determine a tractor orientation vector V2. Such a position may be derived from a GPS system for instance. The processor 15 is designed to calculate the projection P1 of the tractor orientation vector V2 on the reference plane Z and calculate the distance d (figure 3) between the projection point P1 and one point P2 of the plane Z having the same distance from the reference points Ra, Rb. The automatic controller 16 of the movement of the tractor 2 is designed to move the tractor 2 so that the tractor orientation vector V2 becomes parallel to the implement orientation vector V1 (figure 4) and the projection distance is minimized at the end of path Pi (i.e. the offset between vectors is zero).
Conveniently, the camera 9 is a stereo camera in the embodiment of figures 3 and 4.
The processor 15 comprises a selecting device for manually selecting on the image shown on the display 12 (for instance with the usual commands used in portable devices provided with touch screen) regions of interest ROI (figure 5 shows rectangular sub regions) containing the image of the hitches. The processor 15 may process the pixel contained in the region of interest ROI only to detect the reference points with reduced computational power. Accordingly, the software does not process the entire image from the camera 9. Instead, the system processes only the ROI which only includes the view of the hitch.

In a different embodiment (not shown) the connection point 4 may be placed in front of the tractor 2. Of course, in this case, 3D camera 9 will be positioned in order to take images of the space in front of the tractor facing the implement.

## Claims

1. System for connecting automatically (1) a tractor (2) provided with a connection point (4) and an implement (5) provided with at least one hitch (7) and configured for being connected with the connection point (4), said system comprising:
a 3D camera (9) carried by the tractor (2) and configured to continuously take images of the three-dimensional space facing the implement (5);
a processor (15) configured to detect on the continuously taken images the hitch (7) and designed to determine the spatial coordinates of the hitch (7) with respect to the position of the tractor (2) in order to calculate a path between the tractor (2) and the hitch (7);
a controller (16) configured to move the tractor (2) along the calculated path so that the tractor (2) approaches the implement (5), or the processor (15) is configured to show the calculated path on a display (12) so that an user (13) may steer the tractor (2), for enabling, at the end of the path the **connection point** of the tractor (4) to match with the hitch (7),
**characterized in that** when the hitch (7) moves out of the field-of-view of the camera (9) the processor (15) is configured to detect on the images alternative reference points to re-calculate the path.

2. System as claimed in claim 1, wherein the processor (13) is designed to suggest extracted alternative reference points to the user (13) to be confirmed by a manual selection command.

3. System as claimed in claim 1 or 2, wherein the implement (5) has at least two hitches (7a, 7b); the processor (15) is configured to find on the images the shape of the two hitches (7a, 7b) to calculate a vertical reference plane (Z) and one implement orientation vector perpendicular to the reference plane (Z);
the processor (15) is configured to receive the information regarding the position and the orientation of the tractor (2) in order to determine a tractor orientation vector; the controller (16) is configured to move the tractor (2) or the processor (15) is configured to show the calculated path on the display (12), so that the tractor orientation vector becomes parallel with the implement orientation vector at the end of the path.

4. System as claimed in any of the preceding claims, wherein said 3D camera (9) is a stereo camera, or a Time of Flight TOF camera or a LIDAR or an imaging radar.

5. System as claimed in any of the preceding claims, wherein the processor (15) comprises a selecting device for manually selecting on the images shown on the display (12) sub regions containing the shape of the hitches; the processor (15) is designed to process the pixels contained in the sub region only to detect the reference points.

6. System as claimed in any of the preceding claims, wherein said processor (15) operates in conjunction with a data base of images of implements with associated hitch that are taken in a teaching phase wherein the hitch is manually selected on each image of the implement;
said processor is designed to use said data base to detect the hitch on the images taken by the camera.

7. System as claimed in any of the preceding claims, wherein said controller (16) is configured to move the tractor by controlling the steering, or the braking, or the transmission and/or the engine of the tractor.

8. Method for connecting automatically (1) a tractor (2) provided with a **connection point** (4) and an implement (5) provided with at least one hitch (7) and configured for being connected with the **connection point** (4), said method comprising the following steps:
taking continuously images of the three-dimensional space facing the implement;
detecting, on the continuously taken images, the hitch (7) of the implement;
determining the spatial coordinates of said hitch with respect to the position of the tractor (2) in order to calculate a path between the tractor (2) and said implement hitch (7);
moving, by means of an automatic controller or under the steering of an user (13), the tractor (2) along the calculated path so that the tractor (2) approaches the implement (5) for enabling, at the end of the path, the connection point of the tractor (4) to match with the implement hitch (7), **characterized by** comprising the step of detecting on the images alternative reference points in order to re-calculate the path when the implement hitch (7) moves out of the field-of-view of the camera (9).

9. Method as claimed in claim 8, comprising the steps of:
suggesting extracted alternative reference points (Ra) to the user (13); and
confirming the suggested alternative reference points (Ra) by a manual selection command.

10. Method as claimed in claim 8 or 9, wherein the implement has at least two hitches (7a, 7b), the method further comprising the steps of:
finding on the images the shape of the two hitches (7a, 7b) to calculate a vertical reference plane (Z) and one implement orientation vector perpendicular to the reference plane (Z); determining a tractor orientation vector;
moving the tractor (2) so that the tractor orientation vector becomes parallel with the implement orientation vector at the end of the path.

11. Method as claimed in any of the claims 8 - 10, comprising a teaching step wherein the image of an implement in use is taken and the position of the hitch is manually determined on the image to create a data base of images of implements with associated hitch; said data base is further used to determine the hitch on the images continuously taken.

12. Work vehicle comprising the system according to any claim from 1 to 6

## Patentansprüche

1. System zum automatischen Verbinden (1) eines Traktors (2), der mit einem Verbindungspunkt (4) versehen ist, und einem Arbeitsgerät (5), das mit mindestens einem Kupplungselement (7) versehen und dazu eingerichtet ist, mit dem Verbindungspunkt (4) verbunden zu werden, wobei das System aufweist:
eine 3D-Kamera (9), die von dem Traktor (2) getragen wird und die dazu eingerichtet ist, kontinuierlich Bilder des dreidimensionalen Raums aufzuzeichnen, der dem Arbeitsgerät (5) zugewandt ist;
einen Prozessor (15), der dazu eingerichtet ist, in den kontinuierlich aufgezeichneten Bildern das Kupplungselement (7) zu erfassen, und der so konstruiert ist, dass er die Raumkoordinaten des Kupplungselements (7) bezüglich der Position des Traktors (2) bestimmt, um eine Bahnkurve zwischen dem Traktor (2) und dem Kupplungselement (7) zu berechnen;
eine Steuereinrichtung (16), die dazu eingerichtet ist, den Traktor (2) entlang der berechneten Bahnkurve derart zu bewegen, dass sich der Traktor (2) dem Arbeitsgerät (5) nähert, oder der Prozessor (15) ist dazu eingerichtet, die berechnete Bahnkurve an einer Anzeigeeinrichtung (12) anzuzeigen, sodass ein Bediener (13) den Traktor (2) steuern kann, um zu ermöglichen, dass am Ende der Bahnkurve der Verbindungspunkt des Traktors (4) mit dem Kupplungselement (7) übereinstimmt,
**dadurch gekennzeichnet, dass**,
wenn sich das Kupplungselement (7) aus dem Blickfeld der Kamera (9) bewegt, der Prozessor (15) dazu eingerichtet ist, in den Bildern alternative Referenzpunkte zu erfassen, um die Bahnkurve neu zu berechnen.

2. System nach Anspruch 1, wobei der Prozessor (15) ausgebildet ist, um dem Bediener (13) extrahierte alternative Referenzpunkte vorzuschlagen, die durch einen manuellen Auswahlbefehl bestätigt werden.

3. System nach Anspruch 1 oder 2, wobei das Arbeitsgerät (5) mindestens zwei Kupplungselemente (7a, 7b) aufweist; wobei der Prozessor (15) dazu eingerichtet ist, in den Bildern die Form der beiden Kupplungselemente (7a, 7b) zu finden, um eine vertikale Referenzebene (Z) und einen Arbeitsgeräte-Ausrichtungsvektor senkrecht zur Referenzebene (Z) zu berechnen;
wobei der Prozessor (15) dazu eingerichtet ist, die Information betreffend die Position und die Ausrichtung des Traktors (2) zu erhalten, um einen Traktor-Ausrichtungsvektor zu bestimmen; wobei die Steuereinrichtung (16) dazu eingerichtet ist, den Traktor (2) zu bewegen oder der Prozessor (15) dazu eingerichtet ist, die berechnete Bahnkurve an der Anzeigeeinrichtung (12) anzuzeigen, sodass der Traktor-Ausrichtungsvektor am Ende der Bahnkurve parallel zum Arbeitsgeräte-Ausrichtungsvektor wird.

4. System nach einem der vorhergehenden Ansprüche, wobei die 3D-Kamera (9) eine Stereokamera oder eine TOF (Time of Flight)-Kamera oder eine LIDAR-Kamera oder ein Bildradar ist.

5. System nach einem der vorhergehenden Ansprüche, wobei der Prozessor (15) eine Auswahleinrichtung zum manuellen Auswählen in den an der Anzeigeeinrichtung (12) angezeigten Bildern von Teilbereichen aufweist, die die Form der Kupplungselemente enthalten; wobei der Prozessor (15) so ausgebildet ist, dass er nur die Bildpunkte verarbeitet, die in dem Teilbereich enthalten sind, um die Referenzpunkte zu erfassen.

6. System nach einem der vorhergehenden Ansprüche, wobei der Prozessor (15) mit einer Datenbank von Bildern von Arbeitsgeräten mit zugeordnetem Kupplungselement zusammenarbeitet, die in einer Lernphase aufgezeichnet wurden, wobei das Kupplungselement jeweils in dem Bild des Arbeitsgeräts manuell ausgewählt wird;
wobei der Prozessor derart ausgebildet ist, dass er die Datenbank verwendet, um das Kupplungselement in den Bildern zu erfassen, die von der Kamera aufgezeichnet wurden.

7. System nach einem der vorhergehenden Ansprüche, wobei die Steuereinrichtung (16) dazu eingerichtet ist, den Traktor durch das Steuern der Lenkung oder der Bremsen oder des Getriebes und/oder des Motors des Traktors zu bewegen.

8. Verfahren zum automatischen Verbinden (1) eines Traktors (2), der mit einem Verbindungspunkt (4) versehen ist, und einem Arbeitsgerät (5), das mit mindestens einem Kupplungselement (7) versehen und dazu eingerichtet ist, mit dem Verbindungspunkt (4) verbunden zu werden, wobei das Verfahren die folgenden Schritte aufweist:
kontinuierliches Aufzeichnen von Bildern des dreidimensionalen Raums, der dem Arbeitsgerät zugewandt ist;
Erfassen des Kupplungselements (7) des Arbeitsgeräts in den kontinuierlich aufgezeichneten Bildern;
Bestimmen der Raumkoordinaten des Kupplungselements bezüglich der Position des Traktors (2), um die Bahnkurve zwischen dem Traktor (2) und dem Arbeitsgeräte-Kupplungselements (7) zu berechnen;
Bewegen des Traktors (2) mittels eines automatischen Steuereinrichtung oder der Lenkeinrichtung durch einen Bediener (13) entlang der berechneten Bahnkurve, sodass sich der Traktor (2) dem Arbeitsgerät (5) nähert, um zu ermöglichen, dass am Ende der Bahnkurve der Verbindungspunkt des Traktors (2) mit dem Arbeitsgeräte-Kupplungselement (7) übereinstimmt,
**dadurch gekennzeichnet, dass**
das Verfahren weiterhin den Schritt des Erfassens von alternativen Referenzpunkten in den Bildern aufweist, um die Bahnkurve neu zu berechnen, wenn sich das Arbeitsgeräte-Kupplungselement (7) aus dem Blickfeld der Kamera (9) bewegt.

9. Verfahren nach Anspruch 8 mit den folgenden Schritten:
Vorschlagen von extrahierten alternativen Referenzpunkten (Ra) an den Bediener (13); und
Bestätigen der vorgeschlagenen alternativen Referenzpunkte (Ra) durch einen manuellen Auswahlbefehl.

10. Verfahren nach Anspruch 8 oder 9, wobei das Arbeitsgerät mindestens zwei Kupplungselemente (7a, 7b) aufweist, wobei das Verfahren weiterhin die folgenden Schritte aufweist:
Finden der Form der beiden Kupplungselemente (7a, 7b) in den Bildern, um eine vertikale Referenzebene (Z) und einen Arbeitsgeräte-Ausrichtungsvektor senkrecht zur Referenzebene (Z) zu berechnen;
Bestimmen eines Traktor-Ausrichtungsvektors;
Bewegen des Traktors (2) derart, dass der Traktor-Ausrichtungsvektor am Ende der Bahnkurve parallel zum Arbeitsgeräte-Ausrichtungsvektor wird.

11. Verfahren nach einem der Ansprüche 8 bis 10, aufweisend einen Lernschritt, wobei das Bild eines Arbeitsgeräts, das gerade verwendet wird, aufgezeichnet wird und die Position des Kupplungselements in dem Bild manuell bestimmt wird, um eine Datenbank von Bildern der Arbeitsgeräte, die dem Kupplungselement zugeordnet sind, zu erzeugen; wobei die Datenbank weiterhin verwendet wird, um das Kupplungselement in den kontinuierlich aufgezeichneten Bildern zu bestimmen.

12. Arbeitsfahrzeug, das das System gemäß einem der Ansprüche 1 bis 6 aufweist.

## Revendications

1. Système de raccordement automatique (1) entre un tracteur (2) pourvu d'un point de raccordement (4) et un outil (5) pourvu d'au moins un attelage (7) et conçu pour être raccordé au point de connexion (4), ledit système comprenant :
une caméra 3D (9) portée par le tracteur (2) et configurée pour prendre continuellement des images de l'espace tridimensionnel en face de l'outil (5) ;
un processeur (15) configuré pour détecter l'attelage (7) sur les images prises en continu et conçu pour déterminer les coordonnées spatiales de l'attelage (7) par rapport à la position du tracteur (2) afin de calculer un trajet entre le tracteur (2) et l'attelage (7);
un dispositif de commande (16) configuré pour déplacer le tracteur (2) le long du trajet calculé de manière à ce que le tracteur (2) s'approche de l'outil (5), ou le processeur (15) est configuré pour afficher le trajet calculé sur un écran (12) de manière à ce qu'un utilisateur (13) puisse conduire le tracteur (2), afin de faire correspondre, à la fin du trajet, le **point de raccordement** du tracteur (4) avec l'attelage (7),
**caractérisé en ce que**,
lorsque l'attelage (7) n'apparaît plus dans le champ de vision de la caméra (9), le processeur (15) est configuré pour détecter sur les images des points de référence alternatifs afin de recalculer le trajet.

2. Système selon la revendication 1, dans lequel le processeur (15) est conçu pour suggérer à l'utilisateur (13) des points de référence alternatifs extraits qui doivent être confirmés à l'aide d'une commande de sélection manuelle.

3. Système selon la revendication 1 ou 2, dans lequel l'outil (5) a au moins deux attelages (7a, 7b) le processeur (15) est configuré pour détecter sur les images la forme des deux attelages (7a, 7b) afin de calculer un plan de référence vertical (Z) et un vecteur d'orientation unique de l'outil perpendiculaire au plan de référence (Z);
le processeur (15) est configuré pour recevoir les informations concernant la position et l'orientation du tracteur (2) afin de déterminer un vecteur d'orientation du tracteur ; le dispositif de commande (16) est configuré pour déplacer le tracteur (2) ou le processeur (15) est configuré pour afficher le trajet calculé à l'écran (12), de manière à ce que le vecteur d'orientation du tracteur soit parallèle au vecteur d'orientation de l'outil à la fin du trajet.

4. Système selon l'une quelconque des revendications précédentes, dans lequel ladite caméra 3D (9) est une caméra stéréoscopique, ou une caméra temps de vol (TOF), ou une caméra LIDAR ou un radar imageur.

5. Système selon l'une quelconque des revendications précédentes, dans lequel le processeur (15) comprend un dispositif de sélection pour sélectionner manuellement sur les images affichées à l'écran (12) des sous-régions contenant la forme des attelages ; le processeur (15) est conçu pour traiter uniquement les pixels de la sous-région afin de détecter les points de référence.

6. Système selon l'une quelconque des revendications précédentes, dans lequel ledit processeur (15) fonctionne en liaison avec une base de données d'images d'outils avec attelage associé prises lors d'une phase d'instruction dans laquelle l'attelage est sélectionné manuellement sur chaque image de l'outil ;
ledit processeur est conçu pour utiliser ladite base de données afin de détecter l'attelage sur les images prises par la caméra.

7. Système selon l'une quelconque des revendications précédentes, dans lequel ledit dispositif de commande (16) est configuré pour déplacer le tracteur en commandant la direction, ou le freinage, ou la transmission et/ou le moteur du tracteur.

8. Méthode de raccordement automatique (1) entre un tracteur (2) pourvu d'un **point de raccordement** (4) et un outil (5) pourvu d'au moins un attelage (7) et configuré pour être raccordé avec le **point de raccordement** (4), ladite méthode comprenant les étapes suivantes :
la prise continue d'images de l'espace tridimensionnel en face de l'outil;
la détection, sur les images prises en continu, de l'attelage (7) de l'outil ;
la détermination des coordonnées spatiales dudit attelage par rapport à la position du tracteur (2) afin de calculer un trajet entre le tracteur (2) et ledit attelage de l'outil (7);
le déplacement, par le biais d'un dispositif de commande automatique ou sous la direction d'un utilisateur (13), du tracteur (2) le long du trajet calculé de manière à ce que le tracteur (2) s'approche de l'outil (5) pour faire correspondre, à la fin du trajet, le point de raccordement du tracteur (2) avec l'attelage de l'outil (7),
**caractérisé par**
l'étape de détection des points de référence alternatifs sur les images pour recalculer le trajet lorsque l'attelage de l'outil (7) sort du champ de vision de la caméra (9).

9. Méthode selon la revendication 8, comprenant les étapes suivantes : suggérer des points de référence alternatifs extraits (Ra) à l'utilisateur (13) ; et
confirmer les points de référence alternatifs suggérés (Ra) par une commande de sélection manuelle.

10. Méthode selon la revendication 8 ou 9, dans laquelle l'outil a au moins deux attelages (7a, 7b), la méthode comprenant en outre les étapes suivantes:
détecter sur les images la forme des deux attelages (7a, 7b) afin de calculer un plan de référence vertical (Z) et un vecteur d'orientation unique de l'outil perpendiculaire au plan de référence vertical (Z);
déterminer un vecteur d'orientation du tracteur ;
déplacer le tracteur (2) de manière à ce que le vecteur d'orientation du tracteur devienne parallèle au vecteur d'orientation de l'outil à la fin du trajet.

11. Méthode selon l'une quelconque des revendications 8 à 10, comprenant une phase d'instruction dans laquelle l'image d'un outil en usage est prise et la position de l'attelage est déterminée manuellement sur l'image afin de créer une base de données d'images d'outils avec attelage associé ; ladite base de données est utilisée en outre pour déterminer l'attelage sur les images prises en continu.

12. Véhicule de travail comprenant le système selon l'une quelconque des revendications 1 à 6.
